# EUROPÄISCHE PATENTSCHRIFT

(11) **EP 0 563 965 B1**
(45) Veröffentlichungstag und Bekanntmachung des Hinweises auf die Patenterteilung: **22.11.1995**
(21) Anmeldenummer: 93105434.0
(22) Anmeldetag: 01.04.1993
(51) Int. Cl.: B60T 8/48

(54) **Hydraulisches Umschaltventil für eine Fahrzeugbremsanlage**
Hydraulic switchover valve for vehicle brake system
Soupape de commutation hydraulique pour système de freinage pour véhicules

(30) Priorität: 03.04.1992 DE 4211096
(43) Veröffentlichungstag der Anmeldung: 06.10.1993
(73) Patentinhaber: ITT Automotive Europe GmbH, 60488 Frankfurt (DE)
(72) Erfinder: Beck, Erhard, D-6290 Weilburg (DE); Risch, Stefan, D-6108 Weiterstadt (DE)
(74) Vertreter: Portwich, Peter

(56) Entgegenhaltungen:
- WO-A-93/00241
- DE-A- 4 001 421

## Beschreibung

Die Erfindung betrifft ein hydraulisches Umschaltventil gemäß dem Oberbegriff des Hauptanspruches.

Eine Bremsanlage mit einem solchen Ventil ist aus der DE- 38 31 426 A1 bekannt. In dieser Bremsanlage führt vom Hauptbremszylinder über ein hydraulisch gesteuertes 3/2-Wegeventil, welches zugleich als Umschaltventil und als Trennventil dient, und über ein elektromagnetisches, stromlos offenes Einlaßventil eine Bremsleitung zu einer Radbremse eines angetriebenen Rades. Im Falle einer Blockierschutzregelung wird über ein elektromagnetisches, stromlos geschlossenes Auslaßventil Druckmittel in einen Niederdruckspeicher abgelassen. Aus diesem fördert eine Rückförderpumpe das Druckmittel wieder in die Bremsleitung zwischen das hydraulische 3/2-Wegeventil und das Einlaßventil. Für eine Antriebsschlupfregelung ist die Saugseite der Pumpe über den dritten Anschluß des 3/2-Wegeventils mit dem Hauptzylinder verbunden, so daß sie über den Hauptzylinder aus dem Druckmittelbehälter ansaugen kann. Bei unbetätigter Bremse ist die Verbindung vom Hauptbremszylinder zur Saugseite der Pumpe hergestellt, während die Bremsleitung gesperrt ist. Sobald vom Hauptbremszylinder aus Druck aufgebaut wird, stellt sich das 3/2-Wegeventil in seine zweite Schaltposition, in welcher die Verbindung vom Hauptbremszylinder zur Radbremse hergestellt ist.

Hydraulische Umschaltventile haben den Vorteil, daß elektrische Leitungen eingespart werden. Es ist jedoch von Nachteil, daß bei jeder Bremsbetätigung zum Umschalten des Ventils ein gewisses Schaltvolumen benötigt wird, welches das Pedalgefühl im Bremspedal beeinträchtigt, da beim Schließen des Ventils die Schaltervolumenaufnahme ruckartig erfolgt.

Die Aufgabe der vorliegenden Erfindung besteht daher darin, ein hydraulisches Umschaltventil zu schaffen, welches Beeinträchtigungen bei der Pedalbetätigungen weitgehend vermeidet. Diese Aufgabe wird gelöst durch die kennzeichnenden Merkmale des Hauptanspruchs. Dadurch, daß das Umschaltventil jeweils in der Schaltposition verharrt, welche dem letzten Druckaufbau in der Bremsleitung entspricht, nimmt das Umschaltventil immer nur bei der ersten Bremsung nach einer Antriebsschlupfregelung sein Schaltvolumen auf. Bei jeder darauffolgenden Bremsung ist es bereits geschlossen und der Fahrer hat ein komfortables Pedalgefühl.

Eine konstruktiv vorteilhafte und funktionssichere Ausgestaltung des Ventils ergibt sich aus den Unteransprüchen.

Weitere vorteilhafte Merkmale des erfindungsgemäßen Umschaltventils zeigt die folgende Beschreibung eines bevorzugten Ausführungsbeispiels anhand einer Zeichnung.

Das Umschaltventil 1 befindet sich im Gehäuse 2 und wird durch den Schraubdeckel 4 in der Bohrung 3 gehalten. Der Schraubdeckel 4 besitzt einen radialen Atmosphärenanschluß 6, der in eine Ringnut 8 mündet, welche durch den O-Ring 10 vor Verschmutzung geschützt ist. Nach innen besitzt der Schraubdeckel 4 eine zylindrische Ausnehmung 12, die den Kolben 14 führt. Dieser wird von der Druckfeder 16, welche sich an der Stirnwand 18 der zylindrischen Ausnehmung 12 abstützt, in Richtung auf das Bohrungsinnere beaufschlagt. Der Kolben 14 hat den Durchmesser D und ist mit der Dichtmanschette 20 gegen die zylindrische Ausnehmung 12 abgedichtet. Die Dichtmanschette 20 besitzt ein V-förmiges Profil mit einer ins Bohrungsinnere, nach außen gerichteten Dichtlippe 21. An seiner dem Schraubdeckel 4 abgewandten Seite weist der Kolben 14 einen axialen Fortsatz 22 und mehrere Anschlagssockel 24 auf. Letztere begrenzen, indem sie am Ventilsitz 26 anstoßen, den Hub des Kolbens 14. Der Ventilsitz 26 besitzt einen Öffnungsdurchmesser d, der kleiner ist als der Durchmesser D des Kolbens 14. Er wirkt mit einem Ventilschließglied zusammen, welches durch den axialen Fortsatz 22 vom Ventilsitz 26 abhebbar ist. Das Ventilschließglied 32 wird in Schließrichtung von der Ventilfeder 30 beaufschlagt, wobei der Filter 28, der Partikel im Druckmittel von Ventilsitz 26 fernhalten soll, gleichzeitig als Federtopf zur Vereinfachung der Montage dient, indem er vor Einbau in den Ventilsitz 26 eingepreßt wurde.

Durch diesen Aufbau besitzt das Umschaltventil 1 drei Kammern 34,36 und 38, welche folgenden Drücken ausgesetzt sind:
Die Kammer 34 steht mit einem nicht dargestellten Hauptzylinder in Verbindung, so daß in ihr der Hauptzylinderdruck p₂ herrscht. Die Kammer 36 ist dem Druck p₁ an der Saugseite der Pumpe ausgesetzt. In der dritten Kammer 38 schließlich herrscht durch den Atmosphärenanschluß 6 der Atmosphärendruck p₀.

Es ergibt sich folgende Funktionsweise des Umschaltventils 1:
Bei einer Normalbremsung, d.h., wenn in der Kammer 34 ein erhöhter Druck aufgebaut wird, verschiebt sich der Kolben 14 gegen die Druckfeder 16, wie in der linken Bildhälfte dargestellt ist, so daß sich das Ventil schließt. Die Dichtmanschette 20 ist so ausgelegt, daß auch, wenn der Druck p₂ wieder dem Atmosphärendruck entspricht, der Kolben in seiner Position verbleibt, weil die Reibkraft der Dichtlippe 21 größer ist als die Druckkraft der Druckfeder 16. Dieser Effekt wird durch das V-förmige Profil der Dichtmanschette 20 unterstützt, da bei Druckaufbau die Dichtlippe 21 fester an die Wand der zylindrischen Ausnehmung 12 gedrückt wird und die Reibung gegen eine Bewegung in Öffnungsrichtung erhöht. Auch bei der Blockierschutzregelung fährt das Umschaltventil in seine geschlossene Position bzw. bleibt in dieser, weil der Druck p₁, auch wenn die Pumpe saugt, nicht so weit unter dem Atmosphärendruck p₀ liegt, als daß der Atmoshärendruck eine ausreichende Kraft in Öffnungsrichtung ausübt, solange der Druck p₂ in der Kammer 34 dem Bremsdruck entspricht.

Während einer Antriebsschlupfregelung jedoch sind der Druck p₀ und der Druck p₂ gleich dem Atmosphärendruck. Wenn jetzt der Druck P₁ unter Atmosphärendruck liegt, verschiebt sich der Kolben 14 aufgrund seines gegenüber dem Ventilsitz größeren Durchmesser D nach oben, und das Ventilschließglied 32 hebt sich vom Ventilsitz 26 ab. Die Saugverbindung von der Pumpe zum Hauptzylinder ist hergestellt. Zwar ist die Reibkraft der Dichtlippe 21 gegen die Schließrichtung des Ventils geringer als gegen die Öffnungsrichtung, jedoch ist die Druckfeder 16 stärker ausgelegt als die lediglich zur Stabilsierung des Ventilschließgliedes 32 dienende Ventilfeder 30, so daß das Ventil in diesem Falle in seiner Offenstellung verbleibt. Erst bei der nächsten durch den Hauptzylinder betätigten Bremsung schließt es sich wieder, und nur dann nimmt es das zum Schließen notwendige Schaltvolumen auf. Das Pedalgefühl bei einer Bremsung ist in allen anderen Fällen ungestört.

### Bezugszeichenliste

- 1: Umschaltventil
- 2: Gehäuse
- 3: Bohrung
- 4: Schraubdeckel
- 6: Atmosphärenanschluß
- 8: Ringnut
- 10: O-Ring
- 12: zylindrische Ausnehmung
- 14: Kolben
- 16: Druckfeder
- 18: Stirnwand
- 20: Dichtmanschette
- 21: Dichtlippe
- 22: Fortsatz
- 24: Anschlagsockel
- 26: Ventilsitz
- 28: Filter
- 30: Ventilfeder
- 32: Ventilschließglied
- 34: Kammer
- 36: Kammer
- 38: Kammer

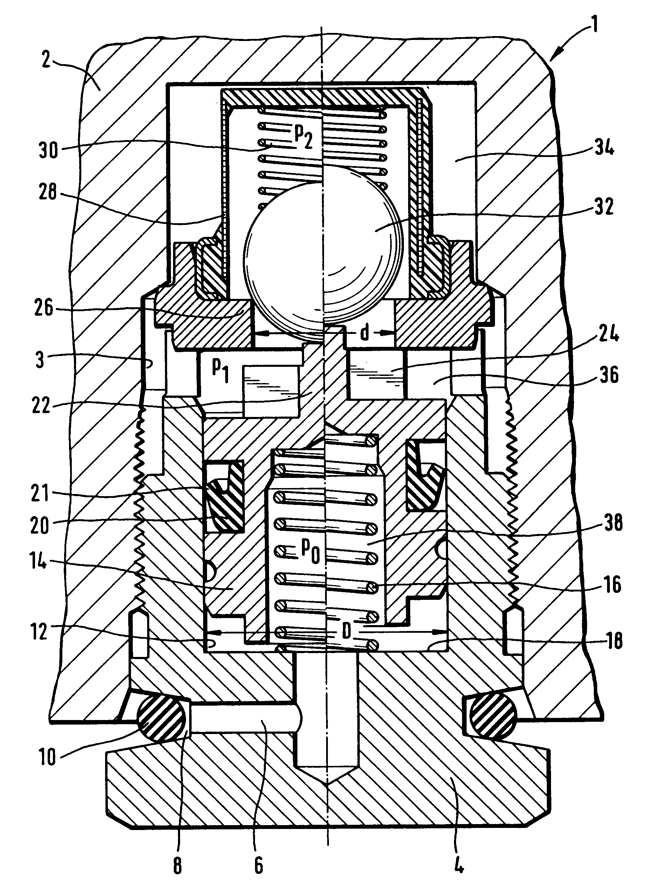

## Patentansprüche

1. Hydraulisches Umschaltventil für eine Fahrzeugbremsanlage mit einem an einen Druckmittelbehälter angeschlossenen Hauptbremszylinder, der über eine Bremsleitung zumindest mit der Radbremse eines angetriebenen Rades verbunden ist, mit einer nach dem Rückförderprinzip arbeitenden Blockierschutzeinrichtung und mit einer selbstansaugenden Rückförderpumpe, die in die Bremsleitung fördert und deren Suagseite für eine Antriebsschlupfregelung über eine Saugleitung und über den Hauptbremszylinder mit dem Druckmittelbehälter verbindbar ist, wobei das Umschaltventil (1) in der Saugleitung angeordnet ist und zumindest immer dann die Verbindung sperrt, wenn die Bremsanlage durch den Hauptbremszylinder betätigt wird, und zumindest immer dann die Verbindung freigibt, wenn die Pumpe saugt ohne gleichzeitige Bremsbetätigung durch den Hauptbremszylinder, dadurch **gekennzeichnet**, daß das Umschaltventil (1) ein Reibelement (21) besitzt, dessen Reibkraft so gewählt ist, daß das Umschaltventil (1) bei druckloser Bremsleitung jeweils in der Schaltposition verharrt, die es beim letzten erfolgten Bremsdruckaufbau eingenommen hat.

2. Hydraulisches Umschaltventil nach Anspruch 1, dadurch **gekennzeichnet**, daß es zwei verschieden große wirksame Flächen (Durchmesser D, d) besitzt, wobei auf die kleinere Fläche (d) in Schließrichtung der Hauptbremszylinderdruck (p₁), auf die Differenzfläche der beiden wirksamen Flächen (D,d) in Schließrichtung der Druck (p₂) an der Saugseite der Pumpe und auf die größeren Fläche (D) in Schließrichtung Atmosphärendruck (p₀) wirkt, wobei in Öffnungsrichtung außerdem eine additive Kraftbeaufschlagung durch eine Druckfeder (16) erfolgt und die der Druckfeder (16) entgegenwirkende Reibkraft größer ist als die Kraft der Druckfeder (16).

3. Hydraulisches Umschaltventil nach Anspruch 2, dadurch **gekennzeichnet**, daß die größere wirksame Fläche vom Durchmesser (D) eines Kolbens (14) bestimmt ist, der mittels einer Dichtmanschette (20) abgedichtet in einem zylindrischen Hohlraum (Ausnehmung 12) axial verschiebbar geführt ist und der von einer Seite axial vom Atmosphärendruck (p₀) und von der Druckfeder (16) beaufschlagt ist und mit seiner anderen Seite eine erste Kammer (36) begrenzt, die dem Druck (p₁) an der Saugseite der Pumpe ausgesetzt ist,
daß die kleinere Fläche vom Durchmesser (d) eines Ventilsitzes (26) bestimmt ist, dessen Ventilschließglied (28) durch einen axialen Fortsatz (22) des Kolbens (14) vom Ventilsitz (26) abhebbar ist, wodurch eine Verbindung von der ersten Kammer (36) zu einer zweiten Kammer (34) herstellbar ist, in welcher der Hauptbremszylinderdruck (p₂) ansteht.
und daß das Reibelement von einer Dichtlippe (21) der Dichtmanschette (20) gebildet wird.

4. Hydraulisches Umschaltventil nach Anspruch 3, dadurch **gekennzeichnet**, daß die Dichtmanschette (20) ein etwa V-förmiges Profil besitzt, dessen Öffnung zur ersten Kammer (36) hin gerichtet ist.

## Claims

1. A hydraulic change-over valve for a vehicle brake system including a master brake cylinder connected to a pressure fluid reservoir and being in communication at least with the wheel brake of a driven wheel via a brake line, including an anti-lock control device operating according to the return principle and a self-priming return pump which delivers fluid into the brake line, and the suction line of which is connectible with the pressure fluid reservoir via a suction line and the master brake cylinder for a traction slip control operation, the change-over valve (1) provided in the suction line shutting off the connection at least in cases where the brake system is actuated by the master brake cylinder and opening the connection in cases where the pump aspirates fluid without simultaneous brake actuation by way of the master brake cylinder,
**characterized** in that the change-over valve (1) includes a friction element (21), the friction force of which is chosen such that, with the brake line unpressurized, the change-over valve (1) remains in the switch position which it adopted during the previous braking pressure build-up.

2. A hydraulic change-over valve as claimed in claim 1,
**characterized** in that it has two differently large effective surfaces (diameters D, d), the master brake cylinder pressure (p₁) being applied to the small surface (d) in the closing direction, the pressure (p₂) on the suction side of the pump being applied to the differential surface of the two effective surfaces (D, d), and atmospheric pressure (p₀) being applied to the large surface (D) in the closing direction, while in the opening direction, further, an additive force is applied by a compression spring (16), and the friction force counteracting the compression spring (16) is in excess of the force of the compression spring (16).

3. A hydraulic change-over valve as claimed in claim 2,
**characterized** in that the large effective surface is determined by the diameter (D) of a piston (14) which is axially slidably guided in a cylindrical cavity (recess 12), sealed by way of a sealing cup (20), and which, on one side, is applied by the atmospheric pressure (p₀) and by the compression spring in an axial direction and, on its other side, confines a first chamber (36) which is subjected to the pressure (p₁) on the suction side of the pump,
in that the small surface is determined by the diameter (d) of a valve seat (26), the valve closure member (28) of which is adapted to lift from the valve seat (26) by an axial extension (22) of the piston (14), whereby a connection can be established from the first chamber (36) to a second chamber (34) in which the master brake cylinder pressure (p₂) prevails, and
in that the friction element is formed of a sealing lip (21) of the sealing cup (20).

4. A hydraulic change-over valve as claimed in claim 3,
**characterized** in that the sealing cup (20) has a roughly V-shaped profile, the opening of which is directed to the first chamber (36).

## Revendications

1. Valve hydraulique de commutation, pour système de freinage pour véhicule comprenant un maître-cylindre de frein, raccordé à un réservoir d'agent de pression et relié au moins au frein d'une roue motrice par l'intermédiaire d'une conduite de frein, un système antiblocage, fonctionnant suivant le principe de refoulement, et une pompe de refoulement à auto-amorçage qui refoule dans la conduite de frein et dont le côté d'aspiration peut être relié au réservoir d'agent de pression, pour une régulation du glissement de traction, par l'intermédiaire d'une conduite d'aspiration et d'un maître-cylindre de frein, tandis que la valve de commutation (1) est disposée dans la conduite d'aspiration et qu'elle bloque la liaison au moins dans chaque cas où le système de freinage est actionné au moyen du maître-cylindre de frein et libère cette liaison au moins chaque fois que la pompe aspire, sans actionnement simultané du frein par le maître-cylindre de frein, caractérisée en ce que la valve de commutation (1) comporte un élément de friction (21) dont la force de frottement est choisie de façon que, chaque fois que la conduite de frein est sans pression, la valve de commutation (1) reste dans la position de commutation qu'elle a occupé lors du dernier établissement de pression de frein qui a eu lieu.

2. Valve hydraulique de commutation selon la revendication 1, caractérisée en ce qu'elle comporte deux surfaces efficaces de grandeurs différentes (diamètres D, d), la pression (p₁) du maître-cylindre de frein exerçant son action sur la plus petite surface (d) dans la direction de fermeture, la pression (p₂) régnant à l'endroit du côté d'aspiration de la pompe exerçant son action sur la différence de surface des deux surfaces efficaces (D, d) dans la direction de fermeture et la pression atmosphérique (p₀) exerçant son action sur la plus grande surface (D) dans la direction de fermeture, tandis que, par ailleurs, dans la direction d'ouverture, une force supplémentaire est exercée par un ressort de compression (16) et que la force de frottement exerçant son action à l'opposé de celle du ressort de compression (16) est supérieure à la force de ce ressort de compression (16).

3. Valve hydraulique de commutation selon la revendication 2, caractérisée en ce que la plus grande surface efficace est déterminée par le diamètre (D) d'un piston (14) qui, est guidé de façon à pouvoir être déplacé en translation axiale dans une cavité cylindrique (logement 12) d'une manière étanche assurée au moyen d'une coupelle d'étanchéité (20) et qui, d'un côté, est soumis axialement à l'action de la pression atmosphérique (p₀) et du ressort de compression (16), tandis que, par son autre face, il délimite une première chambre (36) qui est soumise à l'action de la pression( p₁) régnant à l'endroit du côté d'aspiration de la pompe,
en ce que la plus petite surface est déterminée par le diamètre (d) d'un siège de valve (26) dont l'obturateur de valve (28) est agencé de façon à pouvoir être soulevé du siège de valve (26) au moyen d'une partie de prolongement axial (22) du piston (14), ce qui permet d'établir une liaison menant de la première chambre (36) à une deuxième chambre (34) dans laquelle règne la pression de maître-cylindre de frein (p₂)
et en ce que l'élément de friction est formé par une lèvre d'étanchéité (21) de la coupelle d'étanchéité (20).

4. Valve hydraulique de commutation selon la revendication 3, caractérisée en ce que la coupelle d'étanchéité (20) a une forme profilée pratiquement en V dont l'ouverture est tournée vers la première chambre (36).
